# FASCICULE DE BREVET EUROPEEN

(11) **EP 1 945 518 B1**
(45) Date de publication et mention de la délivrance du brevet: **06.04.2011**
(21) Numéro de dépôt: 06820211.8
(22) Date de dépôt: 13.10.2006
(51) Int. Cl.: B65D 1/02

(54) **FOND DE MOULE POUR MOULE DE FABRICATION DE RECIPIENTS THERMOPLASTIQUES, ET DISPOSITIF DE MOULAGE EQUIPE D'AU MOINS UN MOULE EQUIPE D'UN TEL FOND**
FORMRAUM FÜR DAS FORMEN VON THERMOPLASTISCHEN BEHÄLTERN UND MIT MINDESTENS EINER MIT EINEM SOLCHEN RAUM VERSEHENEN FORM AUSGERÜSTETE FORMVORRICHTUNG
MOLD BASE FOR MOLD MANUFACTURING THERMOPLASTIC CONTAINERS, AND MOLDING DEVICE EQUIPPED WITH AT LEAST ONE MOLD PROVIDED WITH SUCH A BASE

(30) Priorité: 17.10.2005 FR 0510561
(43) Date de publication de la demande: 23.07.2008
(73) Titulaire: Sidel Participations, 76930 Octeville Sur Mer (FR)
(72) Inventeur: LESUEUR, François, 76930 Octeville-sur-Mer (FR)
(74) Mandataire: Cabinet Plasseraud
(86) Numéro de dépôt international: PCT/FR2006/002312
(87) Numéro de publication internationale: WO 2007/045749

(56) Documents cités:
- EP-A- 0 440 964
- EP-A- 0 629 555
- EP-A- 0 703 152
- WO-A-99/07607
- WO-A-03/091117
- US-A- 5 072 841
- US-A- 5 850 932
- US-A- 5 988 416
- US-A- 6 085 924
- US-A1- 2001 001 200
- US-B1- 6 276 546

## Description

La présente invention concerne, d'une manière générale, le domaine de la fabrication, par soufflage ou étirage-soufflage, de récipients, notamment de bouteilles, en matière thermoplastique telle que du PET.

Plus spécifiquement, l'invention concerne des perfectionnements apportés dans la conception d'un fond de moule pour un moule de fabrication, par soufflage ou étirage-soufflage, de récipients, notamment de bouteilles, en matière thermoplastique telle que du PET, lesdits récipients ayant un corps et ayant un fond du type dit pétaloïde avec cinq pieds qui sont distribués angulairement de façon équidistante, qui s'étendent approximativement parallèlement à l'axe du récipient et qui sont séparés les uns des autres par des vallées rayonnantes à fond d'étendue radiale curviligne convexe, lequel fond du récipient se raccorde au corps du récipient par une zone de raccordement sensiblement cylindrique de révolution ayant un diamètre Φ d'environ 85 à 95 mm, ledit fond de moule comportant, pour le moulage du susdit fond des récipients, cinq cavités qui sont distribuées angulairement de façon équidistante, qui s'étendent approximativement parallèlement à l'axe du fond de moule et qui sont séparées les unes des autres par des dorsales rayonnantes à crête d'étendue concave, les fonds desdites cavités étant distribués sur un contour sensiblement circulaire ayant un diamètre de base D compris entre environ 60 et 66 mm.

Par le terme de "dorsale", on entend désigner une partie saillante, allongée sensiblement radialement, du fond de moule qui conduit, dans le fond du récipient moulé, à la formation d'une susdite "vallée" séparant deux pieds consécutifs.

La partie des récipients qui est la plus délicate à fabriquer est le fond. C'est en effet le fond qui supporte le poids de la colonne de liquide contenu dans le récipient et, dans le cas où il présente une résistance mécanique insuffisante, il perd sa forme et le récipient ne peut plus reposer de façon stable sur un support. Un exemple pour un récipient et un tel fond est divulgué par WO9907607.

Or le fond, précisément pour qu'il puisse présenter la résistance mécanique souhaitée, possède une épaisseur de paroi sensible, proportionnellement plus grande que celle du reste du récipient. Il en résulte qu'il exige, de façon relative, plus de matière que le corps du récipient dont la paroi atteint actuellement une épaisseur très faible qu'il devient difficile de réduire.

Le fond constitue donc la partie du récipient dans laquelle des réductions d'épaisseur, et donc des économies de matière thermoplastique, peuvent encore être envisagées.

Au surplus, le fond constitue la région du récipient dont le formage correct par l'opération de soufflage ou d'étirage-soufflage est le plus difficile à réaliser, du fait même que l'épaisseur sensiblement plus importante de matière conduit à un étirage plus lent et à une prise de forme moins facile. Or, pour améliorer sa résistance mécanique, le fond présente en général une forme complexe, voire très complexe, avec de nombreux reliefs en creux et en saillie dont la conformation correcte conduit à la résistance mécanique souhaitée.

Ces difficultés et inconvénients, qui sont d'ordre général, se trouvent encore aggravés dans le cas de récipients pourvus de fonds de forme complexe à pieds saillants multiples dits fonds « pétaloïdes ». En effet, ces fonds pétaloïdes présentent, périphériquement, une alternance de plots en saillie sensiblement axiale formant des pieds et de creux ou « vallées » les séparant et dont les fonds s'étendent radialement approximativement sur une enveloppe hémisphérique : l'étirage, notamment en direction axiale, de la matière au cours du processus de soufflage présente donc des amplitudes très différentes selon qu'il s'agit des pieds ou des vallées. Or, en tout endroit du fond, il faut que la résistance mécanique soit suffisante pour éviter l'affaissement du fond sous l'action du poids du liquide et de la pression interne (ce type de récipient étant souvent destiné à contenir des liquides carbonatés), ce qui est assuré en prévoyant une épaisseur sensiblement accrue de matière. En outre, la forme complexe des fonds pétaloïdes exige une grande maîtrise des conditions de soufflage, et notamment de la pression de soufflage, pour parvenir à la formation de fonds corrects.

Par ailleurs, les fabricants de récipients en matière thermoplastique recherchent de façon permanente à améliorer les conditions économiques de production, en tentant de produire des récipients nécessitant une moindre quantité de matière thermoplastique, et avec des cadences de production toujours accrues.

L'invention a précisément pour objet de répondre à ces attentes de la pratique et de proposer une solution technique perfectionnée concernant la fabrication du fond des récipients, qui soit apte à conduire à des économies sensibles en matière première en même temps qu'à une augmentation sensible de la cadence de production.

A ces fins, selon un premier de ses aspects, l'invention propose un fond de moule pour un moule de fabrication, par soufflage ou étirage-soufflage, de récipients, notamment de bouteilles, en matière thermoplastique telle que du PET, comme mentionné au préambule, lequel fond de moule se caractérise, étant agencé conformément à l'invention, par la combinaison des dispositions qui suivent :
- le fond de chaque cavité, propre à former une surface d'appui d'un pied du récipient, possède une largeur l, considérée parallèlement à la périphérie, comprise entre environ 1,5 et 3,5 mm ;
- chaque dorsale possède un rayon de crête de dorsale r qui est compris entre environ 2 et 5 mm ;
- chaque dorsale possède des flancs qui sont concaves dans une direction approximativement axiale et dont les plans tangents à l'origine forment un angle a compris entre environ 52° et 88° ; et
- la hauteur de dorsale H est comprise entre environ 16,5 et 18 mm.

Par hauteur de dorsale H, on entend désigner la hauteur de la crête de la dorsale à l'aplomb du contour ayant le diamètre de base D précité.

De préférence, on prévoit que les flancs des dorsales sont en outre concaves en direction radiale, de sorte que les flancs de vallées des fonds de récipient obtenus avec ce fond de moule soient bombés de façon tridimensionnelle.

De préférence également, on prévoit que les crêtes des dorsales d'étendue radiale sensiblement concave s'étendent sur une surface de révolution à section droite sensiblement en anse de panier, notamment sensiblement ovale. Grâce à cette disposition, on réduit sensiblement la hauteur de dorsale H par rapport à ce que serait la hauteur de dorsale dans le cas où les crêtes des dorsales s'appuieraient sur une surface hémisphérique.

L'adoption, conformément à l'invention, d'une largeur l des fonds des cavités aussi faible que 1,5 à 3,5 mm va certes à l'encontre de la solution classiquement adoptée d'une largeur des fonds de cavités plus substantielle, typiquement d'au moins 6 mm : des cavités larges facilitent l'évacuation de l'air emprisonné entre la paroi du moule et la paroi du pied du récipient en cours de soufflage, ce qui permet à la paroi en matière thermoplastique en cours de déformation d'atteindre effectivement la paroi du moule et donc d'obtenir un récipient ayant des pieds correctement conformés.

Certes, en tant que telles, des cavités de faible largeur comme préconisé dans le cadre de la présente invention rendent les pieds plus difficilement soufflables dans leur forme correcte. Toutefois, l'invention associe à la réduction de largeur des fonds des cavités une hauteur de dorsale réduite entre environ 16,5 et 18 mm, contre une hauteur supérieure à 18 mm dans un moule conventionnel : la déformation de la matière thermoplastique rendue d'un côté plus difficile dans les fonds des cavités en raison de la largeur plus faible desdits fonds est, par ailleurs, facilitée au niveau des dorsales en raison de la moindre hauteur de dorsale. Au surplus interviennent aussi favorablement la forme concave des flancs de dorsale et l'angle très ouvert de 52° à 88°, contre un angle de l'ordre de 49° dans les conformations actuelles, des flancs de dorsale.

Finalement, le bilan global procuré par un fond de moule agencé selon l'invention réside dans un fond de récipient moulé de façon plus précise et qui est capable de mieux résister à la pression et à la chaleur.

Un exemple typique de réalisation correspond à la combinaison des valeurs suivantes :
Φ = 87,9 mm
l - 1,94 mm
r = 3,5 mm
a = 80°
H = 16,7 mm

De façon avantageuse, on peut prévoir que les cavités possèdent un rayon Rg compris entre environ 5 et 10 mm, et de préférence d'environ 8,5 mm.

On soulignera ici que, outre les avantages énoncés plus haut qui sont procurés grâce à la mise en oeuvre des dispositions de l'invention, un fond de récipient fabriqué à l'aide d'un moule ayant un fond de moule conforme à l'invention présente une surface développée légèrement plus faible que celle d'un fond de récipient traditionnel, entraînant une réduction du volume, et donc du poids de matière qui, bien que restreinte (typiquement de l'ordre de 2 % en poids), n'en est pas moins réelle.

Selon un autre de ses aspects, l'invention propose un dispositif de moulage pour la fabrication, par soufflage ou étirage-soufflage, de récipients, notamment de bouteilles, en matière thermoplastique telle que du PET, lesdits récipients ayant un corps et ayant un fond du type dit pétaloïde avec cinq pieds qui sont distribués angulairement de façon équidistante, qui s'étendent approximativement parallèlement à l'axe du récipient et qui sont séparés les uns des autres par des vallées rayonnantes à fond d'étendue radiale curviligne convexe, lequel fond du récipient se raccorde au corps du récipient par une zone de raccordement sensiblement cylindrique de révolution ayant un diamètre Φ d'environ 85 à 95 mm, lequel dispositif de moulage comporte au moins un moule constitué en au moins trois parties dont un fond de moule comportant, pour le moulage du susdit fond des récipients, cinq cavités qui sont distribuées angulairement de façon équidistante, qui s'étendent approximativement parallèlement à l'axe du fond de moule et qui sont séparées les unes des autres par des dorsales rayonnantes à crête concave, les fonds desdites cavités étant distribués sur un contour sensiblement circulaire ayant un diamètre de base donné D compris entre environ 60 et 66 mm, lequel dispositif de moulage, étant agencé conformément à l'invention, se caractérise en ce que le fond de moule met en oeuvre l'une et/ou l'autre des dispositions exposées plus haut.

L'invention sera mieux comprise à la lecture de la description détaillée qui suit faite en regard des dessins annexés sur lesquels :
- la figure 1 est une vue de dessus d'un fond de moule de soufflage ou d'étirage-soufflage agencé conformément à l'invention ;
- la figure 2 est une vue en coupe diamétrale selon la ligne II-II de la figure 1 ;
- la figure 3 est une vue de dessus en coupe selon la ligne III-III de la figure 2 ;
- la figure 4 est une vue en coupe selon la ligne IV-IV d'une partie du fond de moule de la figure 1 ;
- la figure 5 est une vue en perspective de trois quarts par le dessus du fond de moule des figures 1 à 5 ; et
- la figure 6 est une vue en perspective isométrique de trois quarts par le dessous d'un fond de récipient fabriqué à l'aide du fond de moule des figures 1 à 5.

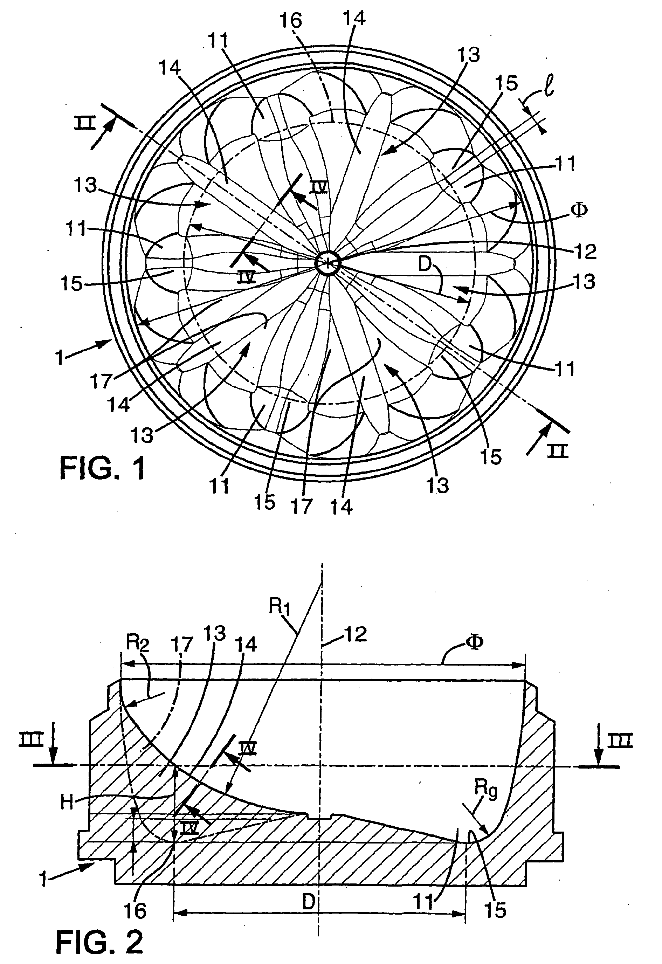

En se reportant maintenant aux figures 1 à 5, il y est représenté un fond 1 de moule destiné à équiper un moule de fabrication, par soufflage ou étirage-soufflage, de récipients, notamment de bouteilles, en matière thermoplastique telle que du PET.

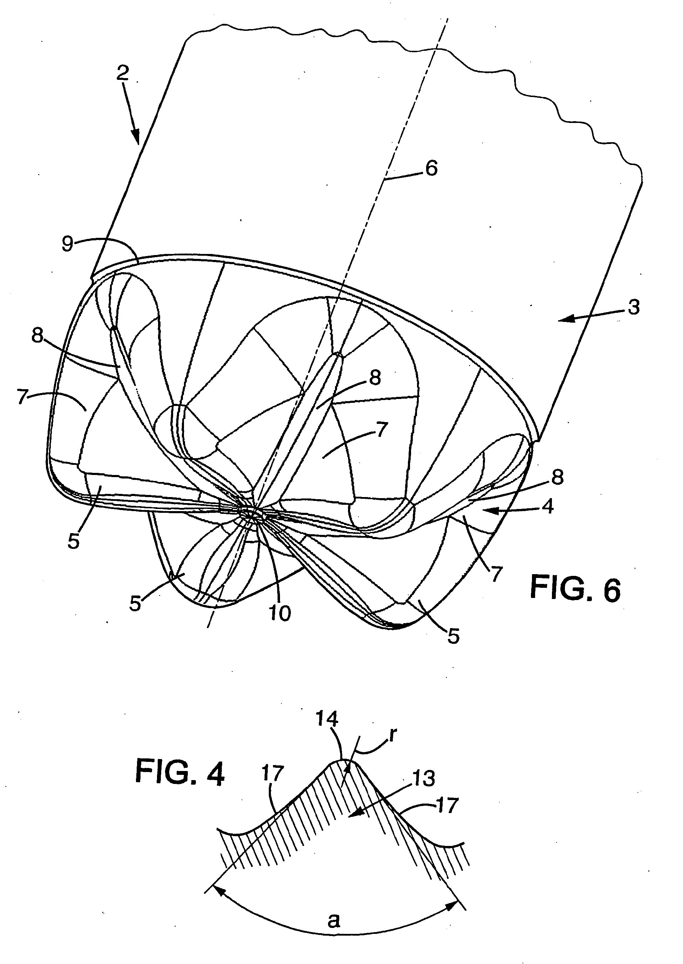

Comme montré à la figure 6, les récipients 2 devant être fabriqués avec ce moule possèdent un corps 3 et possèdent un fond 4 du type dit pétaloïde présentant cinq excroissances formant pieds 5, qui sont distribués angulairement de façon équidistante, qui s'étendent approximativement parallèlement à l'axe 6 du récipient et qui sont séparés les uns des autres par des vallées 7 rayonnantes à fond 8 d'étendue radiale curviligne convexe. Toutes les vallées 7 convergent au centre du fond qui est constitué sous forme d'un plateau 10 en légère saillie extérieure. Le fond 4 du récipient se raccorde au corps 3 du récipient par une zone 9 de raccordement sensiblement cylindrique de révolution ayant un diamètre Φ d'environ 85 à 95 mm.

En se reportant maintenant aux figures 1 à 5, le fond 1 de moule comporte, pour le moulage du susdit fond 4 des récipients 2, des cavités 11 (pour la formation des pieds du fond des récipients) en nombre égal à cinq, qui sont distribuées angulairement de façon équidistante (écartement angulaire mutuel de 72°), qui s'étendent approximativement parallèlement à l'axe 12 du fond 1 de moule et qui sont séparées les unes des autres par des dorsales 13 rayonnantes (c'est-à-dire des parties saillantes, allongées sensiblement radialement, du fond de moule qui conduisent, dans le fond du récipient moulé, à la formation des susdites vallées). Chaque dorsale 13 possède une crête 14 d'étendue concave. Les fonds 15 des cavités 11 sont distribués sur un contour 16 sensiblement circulaire ayant un diamètre de base donné D compris entre environ 60 et 66 mm, ce diamètre correspondant au diamètre de l'assise du fond 4 des récipients (diamètre du contour circulaire sur lequel sont réparties les zones des pieds 5 par lesquelles les récipients reposent sur un support plan).

Conformément à l'invention, le fond 1 de moule est agencé de manière à présenter la combinaison des dispositions qui suivent :
- le fond 15 de chaque cavité 11, propre à former une surface d'appui d'un pied 5 du récipient 2, possède une largeur 1, considérée parallèlement à la périphérie, comprise entre environ 1,5 et 3,5 mm ;
- chaque dorsale 13 possède un rayon de crête 14 de dorsale r qui est compris entre environ 2 et 5 mm ;
- chaque dorsale 13 possède des flancs 17 qui sont concaves dans une direction approximativement axiale (c'est-à-dire dans un plan de section sensiblement droite comme illustré à la figure 4) et dont les plans tangents à l'origine (c'est-à-dire à l'emplacement où s'arrête l'arrondi de la crête 14) forment entre eux un angle a compris entre environ 52° et 88° ; et
- la hauteur de dorsale H (hauteur de la crête 14 à l'aplomb du contour 16 de diamètre D sur lequel sont distribués les fonds 15 des cavités 11, comme illustré à la figure 2) est comprise entre environ 16,5 et 18 mm.

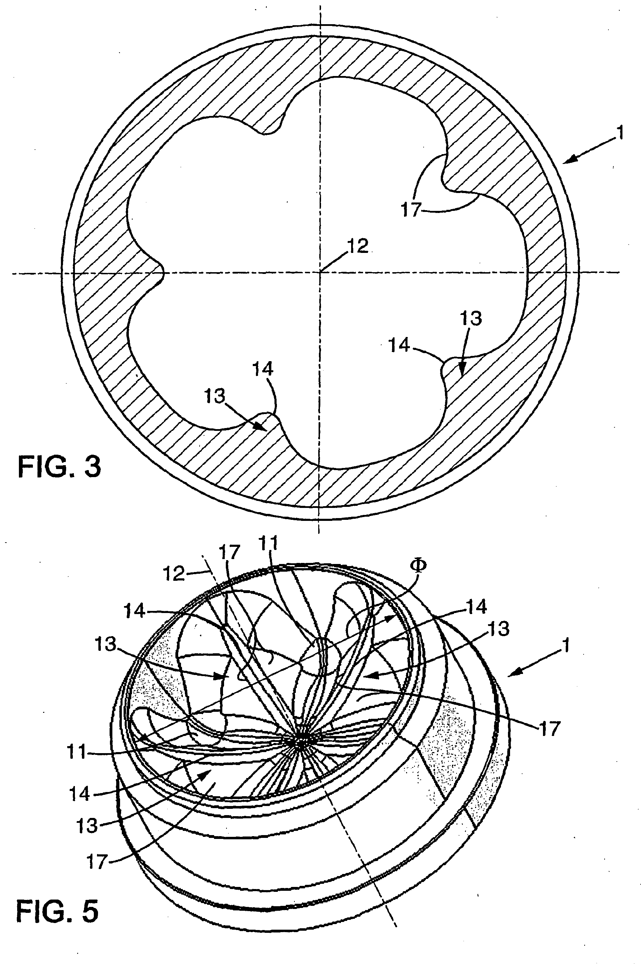

Comme on le voit sur la figure 1 et sur la figure 5, il est souhaitable que les flancs 17 des dorsales 13 soient en outre concaves en direction radiale, de sorte que les flancs de vallée correspondants des fonds de récipients soient bombés de façon convexe tridimensionnellement, c'est-à-dire aussi bien radialement que verticalement, ce qui accroît leur résistance.

L'abaissement de la hauteur de dorsale H peut être obtenu de façon simple en prévoyant que les crêtes 14 des dorsales 13 s'étendent sur une surface de révolution de section droite sensiblement en anse de panier, comme cela est visible dans la représentation de la moitié gauche du fond 1 de moule donnée à la figure 2. La forme exacte de cette surface de révolution n'a pas d'influence sensible dans la mesure où la réduction de la hauteur H est significative. De façon pratique, on choisira une surface de révolution dont la section droite est de construction géométrique simple, telle qu'une ellipse ou, comme illustré à la figure 2, un ovale de grand rayon R1 et de petits rayons extrêmes R2. Ainsi constituée, la surface de révolution sur laquelle s'appuient les crêtes 14 des dorsales se raccorde tangentiellement à l'empreinte de moulage du corps cylindrique de révolution tout en ayant une hauteur inférieure au diamètre de cette empreinte du corps.

De façon avantageuse, on prévoit que les cavités possèdent un rayon Rg compris entre environ 5 et 10 mm, de sorte que les pieds correspondants des fonds de récipients sont sensiblement plus fins que ceux des fonds antérieurs.

Dans un exemple typique, on prévoit la combinaison des valeurs suivantes pour un diamètre Φ = 87,9 mm qui est notamment le diamètre courant de bouteilles d'une contenance de 1,5 litres :
l = 1,94 mm
r = 3,5 mm
a = 80°
H = 16,7 mm
Rg = 8,5 mm

Les dispositions conformes à l'invention trouvent une application tout particulièrement préférée dans un dispositif de moulage pour la fabrication, par soufflage ou étirage-soufflage, de récipients 2, notamment de bouteilles, en matière thermoplastique telle que du PET, lesdits récipients 2 ayant un corps 3 et ayant un fond 4 du type dit pétaloïde avec cinq pieds 5 qui sont distribués angulairement de façon équidistante, qui s'étendent approximativement parallèlement à l'axe 6 du récipient 2 et qui sont séparés les uns des autres par des vallées 8 rayonnantes à fond d'étendue radiale curviligne convexe, lequel fond 4 du récipient se raccorde au corps 3 du récipient par une zone 9 de raccordement sensiblement cylindrique de révolution ayant un diamètre Φ d'environ 85 à 95 mm, lequel dispositif de moulage comporte au moins un moule constitué en au moins trois parties dont un fond 1 de moule comportant, pour le moulage du susdit fond 4 des récipients 2, cinq cavités 11 qui sont distribuées angulairement de façon équidistante, qui s'étendent approximativement parallèlement à l'axe 12 du fond 1 de moule et qui sont séparées les unes des autres par des dorsales 13 rayonnantes à crête 14 d'étendue radiale concave, les fonds 15 desdites cavités 11 étant distribués sur un contour sensiblement circulaire ayant un diamètre de base donné D compris entre environ 60 et 66 mm, lequel dispositif de moulage, étant agencé conformément à l'invention, est équipé d'un fond 1 de moule mettant en oeuvre l'une et/ou l'autre des dispositions exposées plus haut.

## Revendications

1. Fond (1) de moule pour un moule de fabrication, par soufflage ou étirage-soufflage, de récipients (2), notamment de bouteilles, en matière thermoplastique telle que du PET, lesdits récipients (2) ayant un corps (3) et ayant un fond (4) du type dit pétaloïde avec cinq pieds (5) qui sont distribués angulairement de façon équidistante, qui s'étendent approximativement parallèlement à l'axe (6) du récipient (2) et qui sont séparés les uns des autres par des vallées (7) rayonnantes à fond (8) d'étendue radiale curviligne convexe, lequel fond (4) du récipient (2) se raccorde au corps (3) du récipient (2) par une zone (9) de raccordement sensiblement cylindrique de révolution ayant un diamètre Φ dℓ 85 à 95 mm, ledit fond (1) de moule comportant, pour le moulage du susdit fond (4) des récipients, cinq cavités (11) qui sont distribuées angulairement de façon équidistante, qui s'étendent approximativement parallèlement à l'axe (12) du fond (1) de moule et qui sont séparées les unes des autres par des dorsales (13) rayonnantes à crête (14) d'étendue radiale concave, les fonds (15) desdites cavités (11) étant distribués sur un contour (16) sensiblement circulaire ayant un diamètre de base D compris entre 60 et 66 mm,
**caractérisé par** la combinaison des dispositions qui suivent :
- le fond (15) de chaque cavité (11), propre à former une surface d'appui d'un pied (5) du récipient (2), possède une largeur l, considérée parallèlement à la périphérie, comprise entre 1,5 et 3,5 mm ;
- chaque dorsale (13) possède un rayon de crête (14) de dorsale r qui est compris entre 2 et 5 mm ;
- chaque dorsale (13) possède des flancs (17) qui sont concaves dans une direction approximativement axiale et dont les plans tangents à l'origine forment un angle a compris entre 52° et 88° ; et
- la hauteur de dorsale H est comprise entre 16,5 et 18 mm.

2. Fond de moule selon la revendication 1, **caractérisé en ce que** les flancs (17) des dorsales (13) sont en outre concaves en direction radiale.

3. Fond de moule selon la revendication 1 ou 2, **caractérisé en ce que** les crêtes (14) des dorsales (13) d'étendue radiale sensiblement concave s'étendent sur une surface de révolution de section droite sensiblement en anse de panier, ce grâce à quoi on réduit la hauteur de dorsale H.

4. Fond de moule selon la revendication 3, **caractérisé en ce que** les crêtes (14) des dorsales (13) d'étendue radiale sensiblement concave s'étendent sur une surface de révolution de section droite sensiblement ovale.

5. Fond de moule selon l'une quelconque des revendications 1 à 4, **caractérisé en ce que**, en combinaison :
Φ = 87,9 mm
l = 1,94 mm
r = 3,5 mm
a = 80°
H = 16,7 mm

6. Fond de moule selon l'une quelconque des revendications 1 à 5, **caractérisé en ce que** les cavités (11) possèdent un rayon Rg compris entre environ 5 et 10 mm.

7. Fond de moule selon la revendication 6, **caractérisé en ce que** les cavités (11) possèdent un rayon Rg d'environ 8,5 mm.

8. Dispositif de moulage pour la fabrication, par soufflage ou étirage-soufflage, de récipients (2), notamment de bouteilles, en matière thermoplastique telle que du PET, lesdits récipients (2) ayant un corps (3) et ayant un fond (4) du type dit pétaloïde avec cinq pieds (5) qui sont distribués angulairement de façon équidistante, qui s'étendent approximativement parallèlement à l'axe (6) du récipient (2) et qui sont séparés les uns des autres par des vallées (7) rayonnantes à fond (8) d'étendue radiale curviligne convexe, lequel fond (4) du récipient (2) se raccorde au corps (3) du récipient (2) par une zone (9) de raccordement sensiblement cylindrique de révolution ayant un diamètre (Φ) d'environ 85 à 95 mm, lequel dispositif de moulage comporte au moins un moule constitué en au moins trois parties dont un fond (1) de moule comportant, pour le moulage du susdit fond (4) des récipients, cinq cavités (11) qui sont distribuées angulairement de façon équidistante, qui s'étendent approximativement parallèlement à l'axe (12) du fond (1) de moule et qui sont séparées les unes des autres par des dorsales (13) rayonnantes à crête (14) d'étendue radiale concave, les fonds (15) desdites cavités (11) étant distribués sur un contour (16) sensiblement circulaire ayant un diamètre de base donné (D) compris entre environ 60 et 66 mm,
**caractérisé en ce que** le fond (1) de moule est agencé selon l'une quelconque des revendications 1 à 7.

## Claims

1. A mold base (1) for a mold for the manufacture, by blow-molding or stretch-blow-molding, of containers (2), particularly of bottles, made of a thermoplastic such as PET, said containers (2) having a body (3) and having a base (4) of the type said petalloid with five feet (5) which are distributed angularly with uniform spacing, which run approximately parallel to the axis (6) of the container (2) and which are separated from one another by radiating valleys (7) the bottoms (8) of which run radially with a convex curvature, which base (4) of the container (2) connects with the body (3) of the container (2) in a connection region (9) that is substantially a cylinder of revolution having a diameter φ of 85 to 95 mm, said mold base (1) comprising, for molding said base (4) of the containers, five cavities (11) which are distributed angularly at even distances apart, run approximately parallel to the axis (12) of the mold base (1) and are separated from one another by radiating dorsal fins (13) the crests (14) of which are radially concave, the bottoms (15) of said cavities (11) being distributed over a substantially circular contour (16) with a basic diameter D ranging between about 60 and 66 mm,
wherein in combination:
- the base (15) of each cavity (11), adapted for forming a bearing surface of a foot (5) of the container (2), has a width l, measured parallel to the periphery, of between 1.5 and 3.5 mm;
- each dorsal fin (13) has a dorsal fin crest (14) radius r of between 2 and 5 mm;
- each dorsal fin (13) has flanks (17) which are concave in an approximately axial direction and of which the planes tangential to the origin form an angle a of between 52° and 88°; and
- the height H of the dorsal fin ranges between 16.5 and 18 mm.

2. The mold base as claimed in claim 1, wherein the flanks (17) of the dorsal fins (13) are also concave in the radial direction.

3. The mold base according to claims 1 or 2, wherein the crests (14) of the substantially concave radial dorsal fins (13) extend over a surface of revolution the cross section of which is substantially in the shape of a basket handle, whereby the dorsal fin height H is reduced.

4. The mold base as claimed in claim 3, wherein the crests (14) of the substantially concave radial dorsal fins (13) extend over a surface of revolution the cross section of which is substantially oval.

5. The mold base according to any one of claims 1 to 4, wherein, in combination:
φ = 87.9 mm
l=1.94mm
r = 3.5 mm
a = 80°
H = 16.7 mm

6. The mold base according to any one of claims 1 to 5, wherein the cavities (11) have a radius Rg of between about 5 and 10 mm.

7. The mold base as claimed in claim 6, wherein the cavities (11) have a radius Rg of about 8.5 mm.

8. A molding device for the manufacture, by blow-molding or stretch-blow-molding, of containers (2), particularly of bottles, made of thermoplastic such as PET, said containers (2) having a body (3) and having a base (4) of the type said petalloid with five feet (5) which are distributed angularly with uniform spacing, which run approximately parallel to the axis (6) of the container (2) and which are separated from one another by radiating valleys (7) the bottoms (8) of which run radially with a convex curvature, which base (4) of the container (2) connects with the body (3) of the container (2) in a connection region (9) that is substantially a cylinder of revolution having a diameter (φ) of about 85 to 95 mm, which molding device comprises at least one mold consisting of at least three parts including a mold base (1) comprising, for molding said base (4) of the containers, five cavities (11) which are distributed angularly at even distances apart, run approximately parallel to the axis (12) of the mold base (1) and are separated from one another by radiating dorsal fins (13) the crests (14) of which are radially concave, the bottoms (15) of said cavities (11) being distributed over a substantially circular contour (16) with a given basic diameter (D) ranging between about 60 and 66 mm, wherein the mold base (1) is configured as claimed in any one of claims 1 to 7.

## Patentansprüche

1. Formboden (1) für eine Herstellungsform, zum Blasformen oder Streck-Blasziehen von Behältern (2), insbesondere von Flaschen, aus thermoplastischem Material, wie zum Beispiel PET, die Behälter (2) aufweisend einen Körper (3) und aufweisend einen Boden (4), mit petaloid genannter Ausführungsform, mit fünf Füßen (5) die in äquidistanter Weise winkelförmig verteilt sind, die sich annähernd parallel zur Achse (6) des Behälters (2) erstrecken und die durch strahlenförmige Täler (7) am Boden (8), radial konvex gekrümmter Ausdehnung, voneinander getrennt sind, der Boden (4) des Behälters (2) sich verbindend mit dem Körper (3) des Behälters (2) durch einen in etwa rotationszylindrischen Verbindungsbereich (9), aufweisend einen Durchmesser Φ von 85 bis 95 mm, der Formboden (1) umfassend, für das Formen des oben genannten Bodens (4) der Behälter, fünf Vertiefungen (11), die in äquidistanter Weise winkelförmig verteilt sind, die sich annähernd parallel zur Achse (12) des Formbodens (1) erstrecken und die durch strahlenförmige Rücken (13), mit Scheiteln (14) radial konkaver Ausdehnung, voneinander getrennt sind, die Böden (15) der Vertiefungen (11) auf einer in etwa kreisförmigen Umrisslinie (16) verteilt sind, aufweisend einen Basisdurchmesser D zwischen 60 und 66 mm, **gekennzeichnet durch** die Anordnungszusammenstellung wie folgt:
- der Boden (15) jeder Vertiefung (11), geeignet um eine Auflagefläche eines Fußes (5) des Behälters (2) zu bilden, besitzt eine Breite 1, parallel zum Umfang vorgesehen, zwischen 1,5 und 3,5 mm;
- jeder Rücken (13) besitzt einen Rückenscheitelradius (14) r, der zwischen 2 und 5 mm beträgt;
- jeder Rücken (13) besitzt Flanken (17), die in einer näherungsweise axialen Richtung konkav sind und deren Tangentialebenen am Ursprung einen Winkel a zwischen 52° und 88° bilden; und
- die Höhe der Rücken H beträgt zwischen 16,5 und 18 mm.

2. Formboden gemäß Anspruch 1, **dadurch gekennzeichnet, dass** die Flanken (17) der Rücken (13) überdies in radialer Richtung konkav sind.

3. Formboden gemäß Anspruch 1 oder 2, **dadurch gekennzeichnet, dass** die Scheitel (14) der Rücken (13), radialer in etwa konkaver Ausdehnung, sich auf einer Rotationsoberfläche eines geraden Abschnitts in etwa als bogenförmige Einbuchtung erstrecken, dank der sich die Höhe des Rückens H reduziert.

4. Formboden gemäß Anspruch 3, **dadurch gekennzeichnet, dass** sich die Scheitel (14) der Rücken (13), radialer in etwa konkaver Ausdehnung, auf einer Rotationsoberfläche des geraden Abschnitts in etwa oval erstrecken.

5. Formboden gemäß einem der Ansprüche 1 bis 4, **gekennzeichnet durch** die Kombination:
Φ = 87,9 mm
l = 1,94 mm
r = 3,5 mm
a = 80°
H = 16,7 mm

6. Formboden gemäß einem der Ansprüche 1 bis 5, **dadurch gekennzeichnet, dass** die Vertiefungen (11) eine Radius Rg zwischen 5 und 10 mm besitzen.

7. Formboden gemäß Anspruch 6, **dadurch gekennzeichnet, dass** die Vertiefungen (11) einen Radius Rg von zirka 8,5 mm besitzen.

8. Formgebungsvorrichtung zur Herstellung Behältern (2) durch Blasformen oder Streck-Blasziehen von, insbesondere von Flaschen, aus thermoplastischem Material, wie zum Beispiel PET, die Behälter (2) aufweisend einen Körper (3) und aufweisend einen Boden (4), mit petaloid genannter Ausführungsform, mit fünf Füßen (5) die in äquidistanter Weise winkelförmig verteilt sind, die sich annähernd parallel zur Achse (6) des Behälters (2) erstrecken und die durch strahlenförmige Täler (7) am Boden (8), radial konvex gekrümmter Ausdehnung, voneinander getrennt sind, der Boden (4) des Behälters (2) sich verbindend mit dem Körper (3) des Behälters (2) durch einen in etwa rotationszylindrischen Verbindungsbereich (9), aufweisend einen Durchmesser (Φ) von in etwa 85 bis 95 mm, die Formvorrichtung umfasst mindestens eine Form, dargestellt durch mindestens drei Abschnitte deren einer Formboden (1) umfassend, für das Formen des obengenannten Bodens (4) der Behälter, fünf Vertiefungen (11), die in äquidistanter Weise winkelförmig verteilt sind, die sich annähernd parallel zur Achse (12) des Formbodens (1) erstrecken und die durch strahlenförmige Rücken (13), mit Scheiteln (14) radial konkaver Ausdehnung, voneinander getrennt sind, die Böden (15) der Vertiefungen (11) auf einer in etwa kreisförmigen Umrisslinie (16) verteilt sind, aufweisend einen Basisdurchmesser (D) zwischen 60 und 66 mm,
**dadurch gekennzeichnet, dass** der Formboden (1) gemäß einem der Ansprüche 1 bis 7 gestaltet ist.
